# FASCICULE DE BREVET EUROPEEN

(11) **EP 2 362 804 B1**
(45) Date de publication et mention de la délivrance du brevet: **23.05.2018**
(21) Numéro de dépôt: 08875622.6
(22) Date de dépôt: 30.10.2008
(51) Int. Cl.: B01D 33/21, B01D 33/76, B01D 33/80, B65G 53/46

(54) **DISPOSITIF D 'EXTRACTION DES GÂTEAUX ISSUS DE LA FILTRATION À DISQUES SOUS PRESSION ET PROCÉDÉ D'EXTRACTION ASSOCIÉ**
VORRICHTUNG ZUM EXTRAHIEREN VON AUS DRUCKSCHEIBENFILTRATION STAMMENDEN KUCHEN UND ZUGEHÖRIGES EXTRAKTIONSVERFAHREN
DEVICE FOR EXTRACTING CAKES RESULTING FROM PRESSURISED DISC FILTRATION, AND ASSOCIATED EXTRACTION METHOD

(43) Date de publication de la demande: 07.09.2011
(73) Titulaire: Gaudfrin, 78100 Saint Germain en Laye (FR)
(72) Inventeur: GAUDFRIN, Guy, F-78860 Saint-Nom-la-Bretèche (FR)
(74) Mandataire: Alatis
(86) Numéro de dépôt international: PCT/FR2008/001530
(87) Numéro de publication internationale: WO 2010/049598

(56) Documents cités:
- WO-A-2008/038335
- GB-A- 486 927
- GB-A- 2 231 504
- JP-A- 2005 118 754
- US-A- 4 089 429
- US-A- 5 678 971

## Description

La présente invention se rapporte aux installations et aux procédés de séparation liquide/solide et plus particulièrement à un dispositif d'extraction des gâteaux issus de la filtration à disques sous pression et à un procédé d'extraction associé.

L'art antérieur et, notamment, le FR1215168 ou le WO2008038335 divulgue des dispositifs de filtration à disques sous pression.

Ce type de dispositif comprend une enceinte formée d'une cuve étanche dans laquelle sont logés des disques garnis d'une enveloppe en toile filtrante montés sur un axe rotatif, au moins une conduite d'arrivée de liquide chargé en particules solides, au moins une conduite de sortie de filtrat et une trémie de récupération des particules solides agglomérées, se prolongeant, en partie basse, par un sas délimité entre au moins deux éléments d'obturation temporaire.

La technique de filtration sous pression impose l'utilisation d'une enceinte étanche et robuste ainsi qu'un dispositif d'extraction des dépôts solides ou gâteaux secs. Mais, en contrepartie, il permet d'augmenter le rendement de séparation, de traiter les suspensions à température élevée et de réaliser un meilleur essorage des gâteaux.

Une application des dispositifs de ce type se trouve plus particulièrement dans le domaine de l'industrie sucrière et de l'industrie minérale.

Les gâteaux qui sont essorés sous pression deviennent très secs et ne peuvent être extraits par des moyens de pompage traditionnels.

Certains dispositifs d'extraction comprennent un sas délimité par deux vannes à guillotine ou des obturateurs à plaque qui posent des problèmes de maintenance et qui, en outre, ne permettent pas de contrôler le débit d'extraction ce qui entraîne des risques élevés de chocs dus à la chute aléatoire et brutale des gâteaux contenus dans le sas.

La présente invention entend remédier à ces problèmes techniques de manière efficace et satisfaisante.

Ce but est atteint, conformément à la présente invention, au moyen d'un dispositif pour l'extraction des gâteaux issus de la filtration sous pression à partir d'une cuve étanche dans laquelle sont logés des filtres rotatifs, ladite cuve étant pourvue d'une trémie de récupération des particules solides se prolongeant, en partie basse, par un sas délimité entre au moins deux éléments d'obturation temporaire, caractérisé en ce que chaque élément d'obturation temporaire comprend, d'une part, un arbre rotatif disposé transversalement dans le sas et portant au moins un jeu de deux ailettes radiales diamétralement opposées dont la surface globale correspond sensiblement à la section du sas et, d'autre part, des moyens d'étanchéité périphérique montés sur la paroi interne du sas en regard du bord d'extrémité des dites ailettes.

Selon une caractéristique avantageuse, le dispositif comprend un racloir rotatif destiné à rassembler les gâteaux décollés des disques dans le fond de la trémie.

Selon une autre caractéristique avantageuse, la trémie et/ou le sas sont équipés d'au moins un capteur du niveau de matière solide.

Selon encore une autre caractéristique, les arbres rotatifs des éléments d'obturation sont entraînés par des moto-variateurs-réducteurs.

De préférence, les moto-réducteurs sont couplés aux capteurs de niveau.

Selon encore une autre caractéristique, le sas comprend une vanne de mise en pression assurant la communication avec la cuve sous pression et une vanne de décompression assurant la communication avec l'atmosphère.

De préférence, la vanne de décompression est raccordée à un cyclone permettant la récupération des poussières.

Selon une variante de réalisation spécifique, l'arbre rotatif porte au moins deux jeux d'ailettes radiales équidistantes.

Selon une autre variante, l'arbre rotatif porte au moins deux fourches fixées radialement de part et d'autre des ailettes.

Le nombre et la position relative des ailettes et des fourches dépend de la nature rhéologique de la matière solide à extraire.

Selon une autre variante, lesdits moyens d'étanchéité comprennent un joint gonflable monté sur un corps cylindrique qui est inséré par entre deux brides réalisées aux extrémités du sas.

Un autre objet de l'invention est un procédé d'extraction des gâteaux caractérisé en ce qu'on met en communication le sas avec la cuve sous pression, on mesure en continu le niveau des gâteaux dans la trémie en le comparant avec un niveau maximum de référence qui, une fois atteint, déclenche automatiquement l'ouverture de l'élément d'obturation supérieur, on mesure ensuite le niveau de remplissage du sas qui, une fois plein, ferme automatiquement l'élément d'obturation supérieur, puis on isole le sas de la cuve et on le met en communication avec l'atmosphère et on ouvre l'élément d'obturation inférieur de façon à extraire les gâteaux.

Avantageusement, on assure l'étanchéité et la fermeture des éléments d'obturation par expansion du joint d'étanchéité périphérique en emprisonnant le bord des ailettes radiales tandis qu'on ouvre et on libère lesdits éléments par déflation préalable du joint puis mise en rotation des arbres portant lesdites ailettes.

De préférence, on extrait les gâteaux de la cuve de manière volumétrique avec un débit proportionnel à la vitesse de rotation des arbres.

On arrête le mouvement de l'arbre par des contacts de proximité lorsqu'un jeu de deux ailettes radiales formant un disque se trouve dans le plan du joint perpendiculaire à l'axe longitudinal du sas.

Le dispositif et le procédé de l'invention permettent de maîtriser le débit d'extraction des matières solides et permettent également, grâce à la déflation préalable du joint, d'éviter les frottements générateurs d'usure, en particulier en milieu abrasif.

L'invention fait appel à un procédé d'extraction simple susceptible d'être mis en oeuvre de façon continue ou semi-continue et qui peut être entièrement automatisé.

L'invention sera mieux comprise à la lecture de la description qui va suivre, en référence aux dessins annexés sur lesquels :
- La figure 1 représente une vue schématique d'ensemble d'une installation de filtration sous pression équipée d'un mode de réalisation d'un dispositif d'extraction des gâteaux selon l'invention,
- Les figures 2A, 2B représentent des vues en coupe d'un mode de réalisation du dispositif d'extraction de l'invention,
- La figure 2C représente une vue de dessus du dispositif des figures 2A et 2B,
- Les figures 3A et 3B représentent respectivement la vue en coupe et la vue du dessus d'un élément d'extraction comportant un seul jeu d'ailettes et doté de fourches.

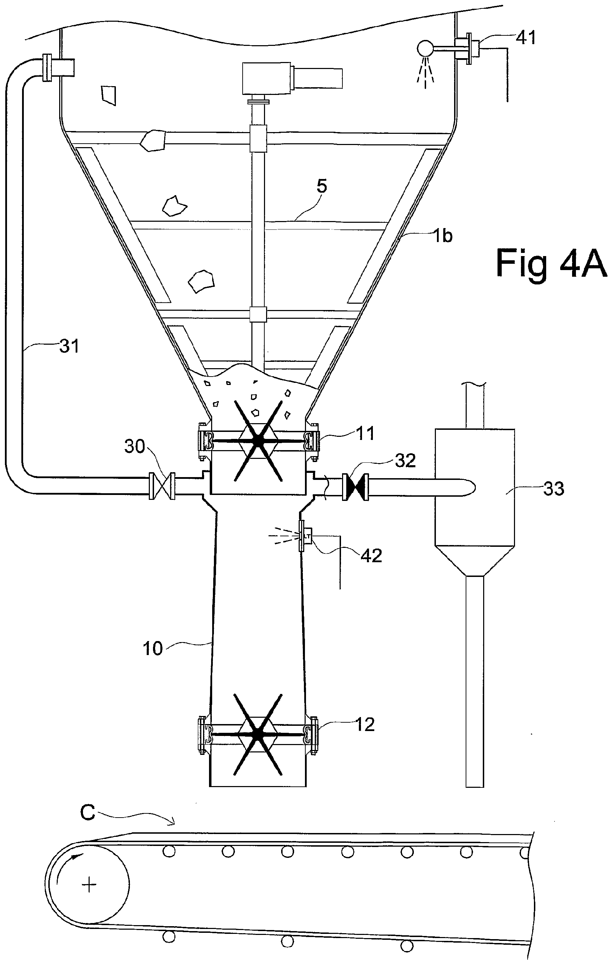

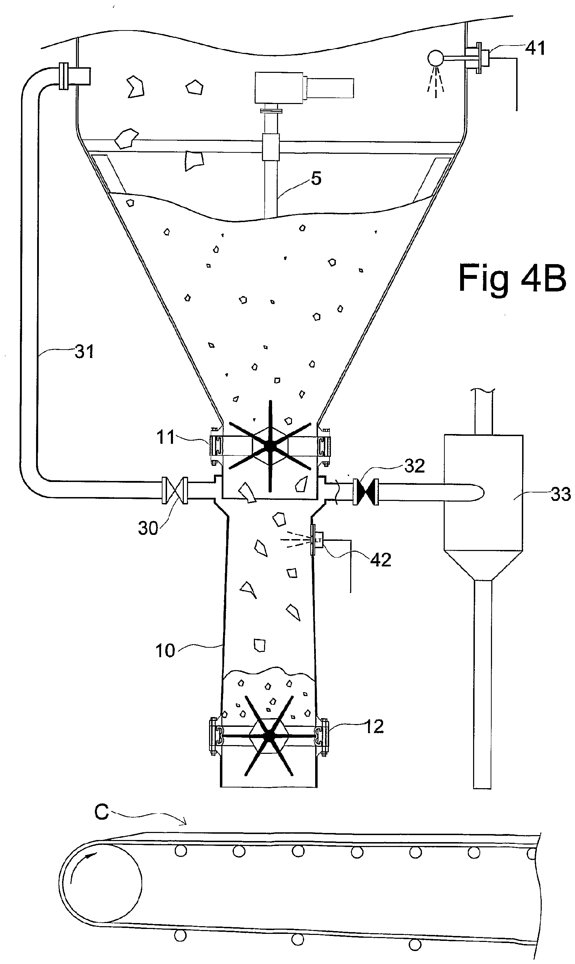

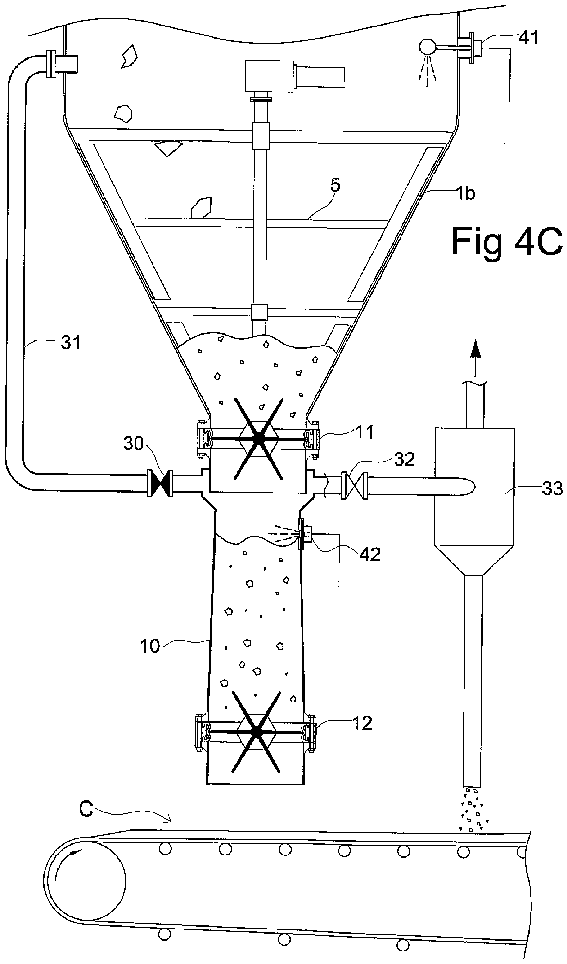

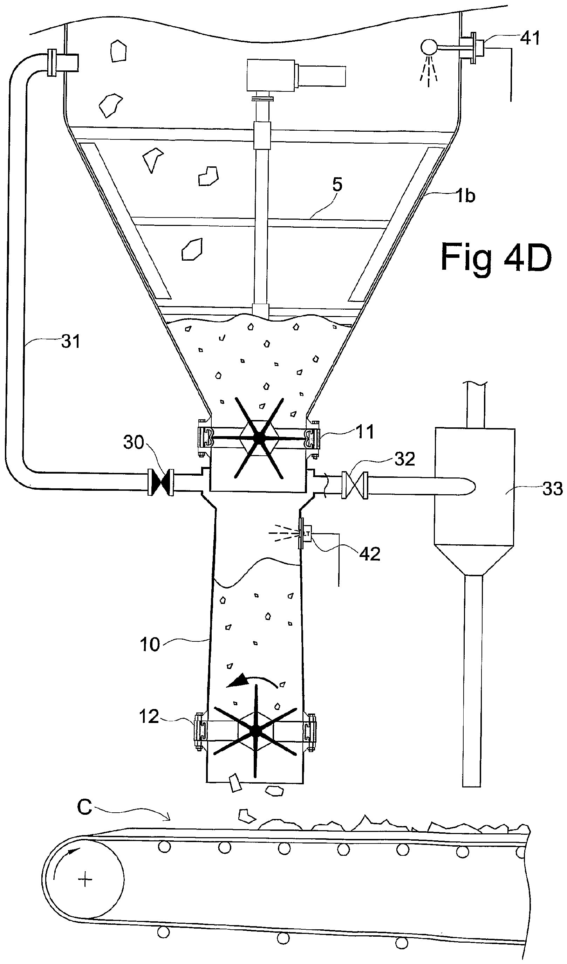

- Les figures 4A à 4D représentent des vues schématiques partielles de l'état du dispositif d'extraction de la figure 1 au cours des étapes successives du procédé de l'invention.

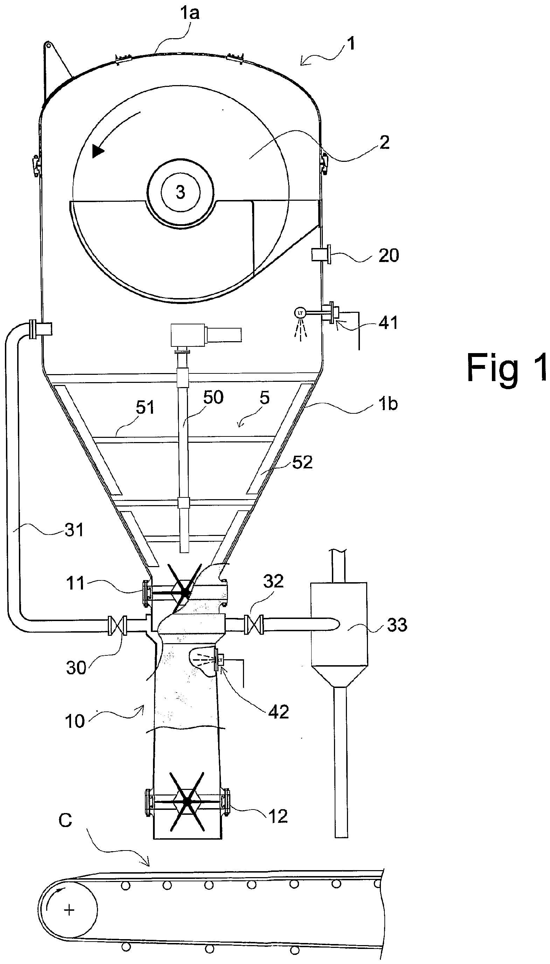

L'installation représentée sur la figure 1 est destinée à la séparation liquide/solide par filtration sous pression.

Cette installation comprend une enceinte extérieure formée ici d'une cuve verticale 1 dont la structure cylindro-conique est étanche et renforcée pour résister à des pressions internes de l'ordre de 10barg.

Cette pression est créée par injection d'air comprimé via la tubulure 20.

Une telle installation est destinée à séparer les carbonates de chaux dans l'industrie sucrière, d'essorer les résidus ou « tailings » résultants de la valorisation des minerais, le minerai transporté par voie hydraulique, le charbon et plus généralement tout résidu avant épandage.

La cuve est raccordée à au moins une conduite d'arrivée de liquide chargé en particules solides et au moins une conduite de sortie du filtrat (non représentées).

Un convoyeur C est disposé sous la cuve pour l'évacuation des matières solides après extraction.

La cuve 1 renferme une série de disques filtrants 2 disposés verticalement et parallèlement entre eux.

Les disques 2 sont montés sur un arbre rotatif 3 s'étendant horizontalement dans la cuve 1.

La structure des disques est traditionnelle et est constituée de secteurs délimités par une ossature métallique, chaque secteur étant garni d'une enveloppe en toile filtrante (non représentée) et étant raccordé radialement à une conduite de sortie du filtrat ménagée à l'intérieur de l'arbre 3.

La partie supérieure comporte un dôme la formant le couvercle de la cuve 1.

La partie inférieure de la cuve 1 correspond à la zone d'extraction de la matière solide et comporte une trémie 1b de collecte des dépôts ou gâteaux secs qui ont été décollés des disques 2.

Compte tenu de la position des disques dans la cuve, il se trouve que les gâteaux tombent de façon asymétrique dans la trémie et il est donc nécessaire de les rassembler dans le fond conique par un racloir rotatif 5.

Le racloir 5 comprend, comme représenté sur les figures, un axe central motorisé 50. L'axe 50 porte des rayons 51 aux extrémités desquels sont montées des lames inclinées 52 qui se déplacent au contact de la paroi tronconique de la trémie 1b.

Le fond de la trémie se prolonge, en partie basse, par un sas 10 délimité entre au moins deux éléments d'obturation temporaire, respectivement supérieur 11 et inférieur 12.

Le sas 10 est équipé d'une vanne 30 de mise en pression raccordée via la conduite 31 avec la cuve 1 sous pression et d'une vanne de décompression 32 assurant la communication avec l'atmosphère.

La vanne de décompression 32 est raccordée à un cyclone 33 permettant la récupération des poussières.

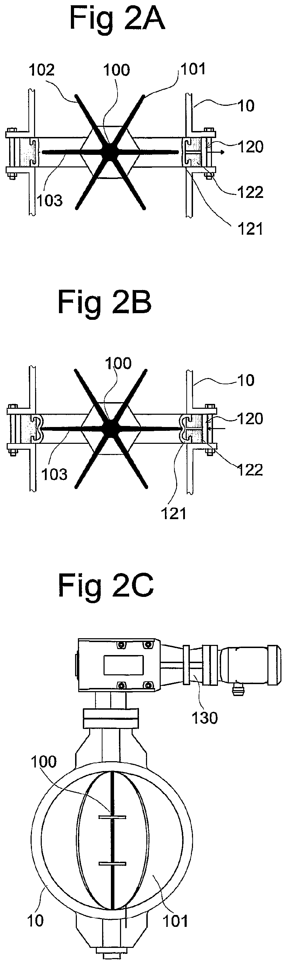

Comme représenté sur les figures 2A, 2B et 2C, chaque élément d'obturation temporaire 11, 12 comprend un arbre rotatif 100 disposé transversalement dans le sas et portant au moins un jeu de deux ailettes radiales 101 diamétralement opposées en formant un disque.

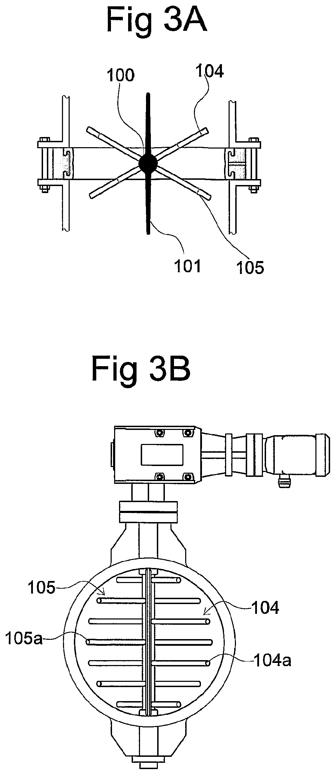

Dans la variante représentée sur les figures 3A et 3B, l'arbre rotatif 100 porte aussi au moins un jeu de deux fourches 104 et 105 fixées radialement de part et d'autre du disque et dont les dents 104a,105a sont, de préférence, intercalées.

La surface globale du jeu d'ailettes 101 correspond sensiblement à la section du sas 10 comme illustré par la figure 2C.

De préférence, l'arbre 100 porte trois jeux d'ailettes 101, 102, 103 à la manière d'une roue à aubes ou pales, comme dans la variante illustrée par les figures.

Néanmoins, selon la nature rhéologique des gâteaux, l'arbre peut aussi ne comporter qu'un jeu de deux ailettes 101 et des fourches 104 et 105 fixées radialement à l'instar d'autres ailettes.

Chacun des éléments d'obturation comprend, en outre, des moyens d'étanchéité périphérique 120 montés sur la paroi interne du sas 10 en regard du bord d'extrémité desdites ailettes.

Ces moyens d'étanchéité comprennent ici un joint annulaire gonflable 121 monté sur un corps cylindrique 122 qui est inséré entre la bride de la trémie et celle du sas pour ce qui concerne l'élément d'obturation supérieur et entre la bride du sas et celle de la goulotte de sortie pour ce qui concerne l'élément d'obturation inférieur.

Le gonflage du joint peut être effectué de façon hydraulique ou pneumatique.

La trémie 1b et/ou le sas 10 sont équipés d'au moins un et de préférence de deux capteurs 41, 42 représentés sur la figure 1 qui permettent de détecter et de mesurer localement le niveau de la matière solide en gâteaux.

Chacun des arbres rotatifs 100 des éléments d'obturation est entraîné par un groupe moto-variateur-réducteur 130 indépendant.

Ces moto-variateurs-réducteurs qui sont visibles sur la figure 2C sont couplés aux capteurs de niveau 41, 42.

Le procédé d'extraction des gâteaux selon l'invention va maintenant être décrit en référence au dispositif illustré par les figures 3A à 3B.

A la mise en service des disques filtrants 2, les éléments d'obturation 11, 12 du sas 10 sont mis en position de fermeture, la vanne 32 est fermée tandis que la vanne 30 est ouverte pour créer un équilibre de pression entre le sas 10 et le volume intérieur de la cuve 1.

La position de fermeture étanche des éléments d'obturation est obtenue en amenant, par rotation de l'arbre 100, un des jeux d'ailettes dans un plan perpendiculaire à l'axe longitudinal du sas 10 puis en procédant au gonflage des joints 121, comme représenté pour l'élément d'obturation inférieur 12 sur la figure 2B.

La pression de gonflage du joint 121 l'applique contre les bords des ailettes 103 assurant ainsi l'étanchéité recherchée.

La trémie 1b se remplit progressivement de matières solides qui se décrochent des disques filtrants 2 et qui viennent s'accumuler par gravité au-dessus de l'élément obturant supérieur 11.

On mesure en continu le niveau de gâteaux dans la trémie au moyen du capteur haut 41 situé sur la paroi interne de la trémie 1b.

Lorsque le capteur haut 41 détecte un niveau de gâteaux correspondant à la valeur de consigne, un signal d'activation est automatiquement envoyé à l'élément d'obturation supérieur 11.

Ce signal entraine d'abord la rupture de l'étanchéité par déflation rapide du joint 121 puis la libération des ailettes 103 et le démarrage du moto-variateur-réducteur 130 de manière à mettre l'arbre 100 en rotation comme illustré par la figure 3B.

A ce stade, l'élément d'obturation inférieur 12 est maintenu en position de fermeture étanche.

Le sas 10 se remplit alors progressivement et proportionnellement à la vitesse de rotation de l'arbre 100 et on mesure son niveau de remplissage.

De préférence, on extrait les gâteaux de la cuve de manière volumétrique avec un débit proportionnel à la vitesse de rotation de l'arbre 100.

Lorsque le capteur bas 42, situé sur la paroi interne du sas, en dessous de l'élément d'obturation supérieur 11, détecte l'atteinte du niveau de consigne maximum, un signal est envoyé automatiquement à l'élément d'obturation supérieur 11 et à son moto-réducteur associé 130 pour commander l'arrêt de la rotation de l'arbre 100 et le gonflage du joint 121.

Le sas est alors isolé de la cuve en fermant la vanne 30 de mise en pression puis le sas est mis à l'atmosphère via la vanne 32 et le cyclone 33, comme représenté sur la figure 3C.

Dès que la pression interne du sas 10 atteint la pression atmosphérique, l'élément d'obturation inférieur 12 reçoit un signal qui commande le dégonflage du joint 121 et démarre le moto-variateur-réducteur associé.

L'arbre 100 est alors mis en rotation ce qui permet la vidange du sas et le déchargement des gâteaux sur le convoyeur C en vue de leur évacuation du site, comme illustré par la figure 3D.

## Revendications

1. Dispositif pour l'extraction des gâteaux issus de la filtration sous pression à partir d'une cuve étanche (1) dans laquelle sont logés des filtres rotatifs (2); ladite cuve étant pourvue d'une trémie (1b) de récupération des particules solides se prolongeant, en partie basse, par un sas (10) délimité entre au moins deux éléments d'obturation temporaire (11, 12), **caractérisé en ce que** chaque élément d'obturation temporaire comprend, d'une part, un arbre rotatif (100) disposé transversalement dans le sas et portant au moins un jeu (101, 102, 103) de deux ailettes radiales diamétralement opposées dont la surface globale correspond sensiblement à la section du sas (10) et, d'autre part, des moyens d'étanchéité périphérique (120) montés sur la paroi interne du sas en regard du bord d'extrémité desdites ailettes.

2. Dispositif selon la revendication 1 **caractérisé en ce qu'**il comprend un racloir rotatif (5) destiné à rassembler les gâteaux décollés des disques (2) dans le fond conique de la trémie (1b).

3. Dispositif selon la revendication 1 ou 2 **caractérisé en ce que** la trémie (1b) et/ou le sas (10) sont équipés d'au moins un capteur (41, 42) du niveau de matière solide.

4. Dispositif selon l'une des revendications 1 à 3 **caractérisé en ce que** les arbres rotatifs (100) des éléments d'obturation (11, 12) sont entraînés par des moto-variateurs-réducteurs (130).

5. Dispositif selon les revendications 3 et 4 **caractérisé en ce que** les moto-variateurs-réducteurs (130) sont couplés aux capteurs de niveau (41, 42).

6. Dispositif selon l'une des revendications précédentes, **caractérisé en ce que** le sas comprend une vanne (30) de mise en pression assurant la communication avec la cuve (1) sous pression et une vanne (32) de décompression assurant la communication avec l'atmosphère.

7. Dispositif selon la revendication 6, **caractérisé en ce que** la vanne (32) de décompression est raccordée à un cyclone (33) permettant la récupération des poussières.

8. Dispositif selon l'une des revendications précédentes, **caractérisé en ce que** l'arbre rotatif (100) porte trois jeux d'ailettes radiales équidistantes.

9. Dispositif selon l'une des revendications précédentes **caractérisé en ce que** l'arbre rotatif (100) porte au moins deux fourches (104) et (105) fixées radialement de part et d'autre des ailettes.

10. Dispositif selon l'une des revendications précédentes **caractérisé en ce que** lesdits moyens d'étanchéité (120) comprennent un joint gonflable (121) monté sur un corps cylindrique (122) qui est inséré entre deux brides réalisées aux extrémités du sas (10).

11. Procédé d'extraction de gâteaux issus de la filtration sous pression dans une cuve étanche (1) pourvue, notamment, d'une trémie (1b) de récupération des particules solides prolongée, en partie basse, par un sas (10) délimité entre au moins deux éléments d'obturation temporaire (11, 12), respectivement supérieur et inférieur, selon l'une des revendications 1 à 10, **caractérisé en ce qu'**on met en communication le sas (10) avec la cuve (1) sous pression, on mesure en continu le niveau des gâteaux dans la trémie (1b) en le comparant avec un niveau maximum de référence qui, une fois atteint, déclenche automatiquement l'ouverture de l'élément d'obturation supérieur (11), on mesure ensuite le niveau de remplissage du sas (10) qui, une fois plein, ferme automatiquement l'élément d'obturation supérieur (11), puis on isole le sas de la cuve et on le met en communication avec l'atmosphère et on ouvre l'élément d'obturation inférieur (12) de façon à extraire les gâteaux.

12. Procédé d'extraction selon la revendication 11 **caractérisé en ce qu'**on assure l'étanchéité et la fermeture des éléments d'obturation (11) et (12) par expansion du joint d'étanchéité périphérique (120) contre le bord des ailettes radiales de même qu'on ouvre et qu'on libère lesdits éléments par déflation préalable du joint (121) avant la mise en rotation des arbres portant lesdites ailettes.

13. Procédé d'extraction selon les revendications 11 ou 12 **caractérisé en ce qu'**on extrait les gâteaux de la cuve (1) de manière volumétrique avec un débit proportionnel à la vitesse de rotation des arbres (100).

## Patentansprüche

1. Vorrichtung für die Extraktion von Filterkuchen, die bei der Druckfiltration in einem dichten Behälter (1) entstehen, in welchem Drehfilter (2) gelagert sind, wobei besagter Behälter mit einem Trichter (1b) zum Auffangen der Feststoffpartikel versehen ist, welcher sich im unteren Teil zu einer Schleuse (10) verlängert, die von mindestens zwei Elementen zum vorübergehenden Verschließen (11, 12) abgegrenzt wird, **dadurch gekennzeichnet** das jedes Element zum vorübergehenden Verschließen zum einen eine quer in der Schleuse angeordnete rotierende Welle (100) und mindestens einen Satz (101, 102, 103) bestehend aus zwei radialen, diametral entgegengesetzten Flügeln, deren Gesamtoberfläche im wesentlichen so groß ist, wie der Querschnitt der Schleuse (10), umfasst, und zum anderen umlaufende Dichtungsmittel (120), die an der Innenwand der Schleuse gegenüber der Endkante besagter Flügel montiert sind.

2. Vorrichtung nach Anspruch 1, **dadurch gekennzeichnet, dass** sie einen rotierenden Abstreifer (5) enthält, der dazu bestimmt ist, die Filterkuchen, die sich von den Scheiben (2) gelöst haben, im kegelförmigen Boden des Trichters (1b) zusammen zu schieben.

3. Vorrichtung nach Anspruch 1 oder 2, **dadurch gekennzeichnet, dass** der Trichter (1b) und/oder die Schleuse (10) mit mindestens einem Feststoff-Füllstandsensor (41, 42) ausgestattet ist.

4. Vorrichtung nach einem der Ansprüche 1 bis 3, **dadurch gekennzeichnet, dass** die rotierenden Wellen (100) der Verschlusselemente (11, 12) durch frequenzgeregelte Getriebemotoren (130) angetrieben werden.

5. Vorrichtung nach den Ansprüchen 3 und 4, **dadurch gekennzeichnet, dass** die frequenzgeregelten Getriebemotoren (130) an die Füllstandsensoren (41, 42) gekoppelt sind.

6. Vorrichtung nach einem der vorhergehenden Ansprüche, **dadurch gekennzeichnet, dass** die Schleuse ein Druckbeaufschlagungsventil (30) aufweist, das mit dem Druckbehälter (1) und einem mit der Atmosphäre verbundenen Druckentlastungsventil (32) in Verbindung steht.

7. Vorrichtung nach Anspruch 6, **dadurch gekennzeichnet, dass** das Druckentlastungsventil (32) an einen Fliehkraftabscheider (33) angeschlossen ist, der das Sammeln von Stäuben ermöglicht.

8. Vorrichtung nach einem der vorhergehenden Ansprüche, **dadurch gekennzeichnet, dass** die rotierende Welle (100) drei Sätze radialer Flügel umfasst, die jeweils im gleichen Abstand zueinander montiert sind.

9. Vorrichtung nach einem der vorhergehenden Ansprüche, **dadurch gekennzeichnet, dass** die rotierende Welle (100) mindestens zwei Gabeln (104) und (105) aufweist, die radial zu beiden Seiten der Flügel fixiert sind.

10. Vorrichtung nach einem der vorhergehenden Ansprüche, **dadurch gekennzeichnet, dass** besagte Dichtungsmittel (120) eine aufblasbare Dichtung (121) umfassen, die auf einen zylindrischen Körper (122) zwischen zwei an den Enden der Schleuse (10) angebrachten Flanschen eingesetzt ist.

11. Verfahren zur Extraktion von Filterkuchen, die aus der Druckfiltration in einem dichten Behälter (1) stammen, welcher insbesondere mit einem Trichter (1b) zum Auffangen der Feststoffpartikel versehen ist, welcher im unteren Bereich zu einer Schleuse (10) verlängert wird, welche von mindestens zwei Elementen zum vorübergehenden Verschließen (11, 12), einem oberen und einem unteren Element, abgegrenzt wird, gemäß einem der Ansprüche 1 bis 10, **dadurch gekennzeichnet, dass** die Schleuse (10) mit dem Druckbehälter (1) verbunden wird, der Füllstand der Filterkuchen im Trichter (1b) durch Vergleich mit einem maximalen Bezugsfüllstand kontinuierlich gemessen wird, wobei sich das obere Verschlusselement (11) bei Erreichen des maximalen Füllstands automatisch öffnet, anschließend der Füllstand in der Schleuse (10) gemessen wird, welche, wenn sie voll ist, das obere Verschlusselement (11) automatisch verschließt, die Verbindung von Schleuse und Behälter anschließend geschlossen wird, die Verbindung mit der Atmosphäre hergestellt und das untere Verschlusselement (12) geöffnet wird, so dass die Filterkuchen extrahiert werden können.

12. Extraktionsverfahren nach Anspruch 11, **dadurch gekennzeichnet, dass** die Abdichtung und das Schließen der Verschlusselemente (11) und (12) durch Weitung der umlaufenden Dichtung (120) zur Endkante der radialen Flügel hin sichergestellt wird, ebenso wie man besagte Elemente durch vorherige Abflachung der Dichtung (121) vor dem Starten der Drehung der Wellen, welche besagte Flügel tragen, öffnet und freigibt.

13. Extraktionsverfahren nach den Ansprüchen 11 oder 12, **dadurch gekennzeichnet, dass** man die Filterkuchen aus dem Behälter (1) volumetrisch mit einem Durchsatz proportional zur Drehgeschwindigkeit der Wellen (100) extrahiert.

## Claims

1. A device for extracting cakes resulting from the pressurised filtration using a sealed vessel (1) in which rotary filters (2) are housed; said vessel being provided with a hopper (1b) for recovering the solid particles extended, at the bottom part, by a chamber (10) delimited between at least two temporary closure elements (11, 12), **characterised in that** each temporary closure element comprises firstly a rotary shaft (100) disposed transversely in the chamber and carrying at least one set (101, 102, 103) of two diametrically opposed radial fins, the total surface area of which corresponds substantially to the cross section of the chamber (10), and secondly peripheral sealing means (120) mounted on the internal wall of the chamber opposite the end edge of said fins.

2. A device according to claim 1, **characterised in that** it comprises a rotary scraper (5) intended to collect the cakes detached from the discs (2) in the conical bottom of the hopper (1b).

3. A device according to claim 1 or claim 2, **characterised in that** the hopper (1b) and/or the chamber (10) are equipped with at least one sensor (41, 42) for the level of solid matter.

4. A device according to any of claims 1 to 3, **characterised in that** the rotary shafts (100) of the closure elements (11, 12) are driven by motorised geared variators (130).

5. A device according to any of claims 3 and 4, **characterised in that** the motorised geared variators (130) are coupled to the level sensors (41, 42).

6. A device according to any of the preceding claims, **characterised in that** the chamber comprises a pressurisation valve (30) providing communication with the pressurised vessel (1) and a decompression valve (32) providing communication with the atmosphere.

7. A device according to claim 6, **characterised in that** the decompression valve (32) is connected to a cyclone (33) for recovering dust.

8. A device according to any of the preceding claims, **characterised in that** the rotary shaft (100) carries three sets of equidistant radial fins.

9. A device according to any of the preceding claims, **characterised in that** the rotary shaft (100) carries at least two forks (104) and (105) fixed radially on either side of the fins.

10. A device according to any of the preceding claims, **characterised in that** said sealing means (120) comprise an inflatable seal (121) mounted on a cylindrical body (122) that is inserted between two flanges produced at the ends of the chamber (10).

11. A method for extracting cakes resulting from the pressurised filtration in a sealed vessel (1) provided in particular with a hopper (1b) for recovering the solid particles extended at the bottom part by a chamber (10) delimited between at least two temporary closure elements (11, 12), respectively upper and lower, according to any of claims 1 to 10, **characterised in that** the chamber (10) is put in communication with the pressurised vessel (1), the level of the cakes in the hopper (1b) is measured continuously while comparing it with a maximum reference level which, once reached, automatically triggers the opening of the upper closure element (11), next the filling level of the chamber (10) is measured, which, once full, automatically closes the upper closure element (11), then the chamber is isolated from the vessel and is put in communication with the atmosphere and the lower closure element (12) is opened so as to extract the cakes.

12. An extraction method according to claim 11, **characterised in that** the sealing and closure of the closure elements (11) and (12) is provided by expansion of the peripheral seal (120) against the edge of the radial fins just as said elements are opened and released by prior deflation of the seal (121) before the shafts carrying said fins are set in rotation.

13. An extraction method according to claim 11 or claim 12, **characterised in that** the cakes are extracted from the vessel (1) volumetrically at a rate proportional to the rotation speed of the shafts (100).
